# EUROPEAN PATENT SPECIFICATION

(11) **EP 1 739 917 B1**
(45) Date of publication and mention of the grant of the patent: **27.04.2016**
(21) Application number: 05014382.5
(22) Date of filing: 01.07.2005
(51) Int. Cl.: H04L 29/06

(54) **Terminal, system and method for discarding encoded parts of a sampled audio stream**
Vorrichtung, System und Verfahren zur Löschung von kodierten Teilen eines gesampelten Audiostromes
Dispositif, système et procédé permettant d'éliminer les parties codées d'un flux audio d'échantillonnage

(43) Date of publication of application: 03.01.2007
(73) Proprietor: QUALCOMM Incorporated, San Diego, CA 92121-1714 (US)
(72) Inventor: Præstholm, Steffen, 9000 Aalborg (DK); Andersen, Søren Vang, Prof., 9000 Aalborg (DK)
(74) Representative: WP Thompson

(56) References cited:
- WO-A-02/32097
- WO-A-02/49291
- US-B1- 6 850 559
- BALAKRISHNAN MIT LCS S SESHAN CMU H: "The Congestion Manager" IETF STANDARD, INTERNET ENGINEERING TASK FORCE, IETF, CH, June 2001 (2001-06), XP015008905 ISSN: 0000-0003

## Description

### Field of the invention

The invention relates to terminals according to the preamble of claim 1, to systems comprising such a terminal, and to methods for discarding encoded parts of a sampled audio stream.

### Background art

Despite recent developments in network technology, packet switched networks may experience periods of congestion at times. During a network congestion, some part of the data packets may be lost somewhere in the network, causing packet losses for individual data flows. Furthermore, during network congestion, part of the data packets usually experiences increasing delay. The impact of these consequences of a network congestion varies greatly between different data types.

A type of packet data particularly vulnerable to network congestion is a data stream that comprises sampled audio stream that has been encoded to a series of data packets, in particular when the sampled audio stream should be generated and received in real time, such as in a conversation between a first and a second party.

If such a sampled audio stream is being transmitted, a network congestion leads easily to degradation of the received signal. A factor adversely contributing to the problem can be the codec used to encode or decode the data stream. If the codec is a so-called state-dependent codec, especially a CELP codec, the effect of packet loss, and consequently the effect of frame loss, propagates to frames that will be received in the future. This reduces the transmission quality not only during the network congestion but also after the congestion of the network has been overcome.

Recently, Floyd and Kohler [1] suggested a TCP-friendly rate control, mechanism for voice that is transmitted over the Internet. In their solution, data packets are discarded at a terminal in response to a control message from the destination terminal.

WO02/49291 discloses a method for controlling a stream of data packets in a packet data communication network. In response to detecting a predetermined condition in the network, at least one packet in the stream of packets is shortened.

WO02/32097 discloses method and system that utilise perceptual quality of service metrics to determine whether to admit new calls onto a VoIP network. The perceptual metrics are generated at a communications device, such as a telephone, that represent the measurement of perceptible variations in the quality level of a voice signal. When a request to admit a new call on the network through a new node is received, a call admission threshold is compared with a priority value associated with the request to determine whether to admit the new call onto the network.

### Summary of the invention

An object of the invention is to reduce the impact that discarding voice packets at the terminal may cause on quality of a sampled audio stream as experienced after decoding at the destination terminal. This object can be achieved as set out with a terminal as set out in claim 1, with a system as set out in claim 10, and with a method as set out in claim 12.

The dependent claims describe various advantageous embodiments of the invention.

### Advantages of the invention

If the discarding unit of a terminal comprising an encoding unit adapted to encode parts of a sampled audio stream to encoded parts, unit adapted to transmit encoded parts to a network in data packets for being transmitted to a destination terminal, and a discarding unit adapted, responsively to receiving a control message from the network, to start discarding encoded parts or data packets, is further adapted to perform discarding of an encoded part or of a data packet comprising an encoded part responsive to perceptual importance of the encoded part, the perceptual quality that would be observed when the encoded parts of the sampled audio stream that were transmitted from the terminal were reproduced at a decoder at the destination terminal may be improved, since the degrading effect of the encoded part that has been discarded has been considered, contrary to discarding the encoded part regardless of its perceptual importance.

If the terminal further comprises a unit adapted to compute a perceptual measure for an encoded part, the perceptual measure preferably reflecting the perceptual importance of the encoded part, and where the discarding unit is adapted to discard the encoded part or a data packet comprising the encoded part if the perceptual measure fails a comparison with a threshold value, the discarding may be made automatic.

If the terminal is adapted to set the threshold value responsive to the control message, the discarding may be performed when requested by the network or the destination terminal so that encoded parts are not unnecessarily discarded.

If the terminal is adapted to set the threshold value responsive to perceptual measure computed for at least one encoded part preceding or succeeding the encoded part, the discarding may be performed in a manner that causes less distortion than discarding a preceding or succeeding encoded part would have caused or would cause, while possibly still complying with any rate restrictions imposed by network congestion. This further improves the quality of the reconstructed sampled audio stream at the decoder.

If the terminal is adapted to increase or decrease discarding of encoded parts or data packets responsive to a change in the control message or to a change in the rate of control messages, e.g. increase discarding due to increasing network congestion, the discarding can be made responsive to network congestion. This decreases the probability of excessively discarding encoded parts.

If the threshold is adjusted responsive to at least one previously taken decision about the discarding of previous encoded parts or data packets, periods during which encoded parts would be excessively or inadequately discarded may be avoided, e.g. if the perceptual importance increases or decreases linearly over a period of time.

If information on the decision of discarding an encoded part or a data packet is used to compute the perceptual measure, quality may be improved since the importance of an encoded part generally depends on the delivery status of earlier frames due to audio time-domain correlation. This time dependency may be taken into account in a probabilistic framework, introducing the status of previous frames, as described by the a priori probabilities, into the computing of the perceptual measure.

The accuracy of this perceptual measure may be further improved through the conversion of a *priori* probabilities into *a posteriori* probabilities upon the reception of feedback information regarding the delivery status of specific encoded parts or data packets.

If the terminal is adapted to update a state register for state dependent coders upon discarding an encoded part or a packet, or upon receiving such feedback information from the network, the error propagating effect may be avoided and speech quality may be improved.

### List of Figures

In the following, the preferred embodiments of the invention are explained in more detail with reference to the examples shown in Figures 1A to 3 of the appended drawings, of which:
Figure 1A shows an overview of a system wherein a terminal according to some aspects of the invention can be used;
Figure 1B illustrates some functional blocks of a terminal according to some aspects of the invention,
Figure 2 shows some functional blocks of a CELP encoder; and
Figure 3 illustrates discarding of encoded parts of a sampled audio stream responsive to their perceptual measure.

Same reference numerals refer to similar structural elements throughout the Figures.

### Detailed description

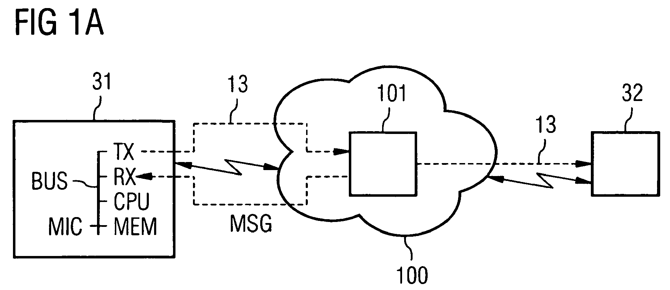

Figure 1A shows an overview of a system wherein a terminal 31. The terminal 31 comprises a transmitter TX, a receiver RX, a processing unit CPU, such as a microprocessor, memory MEM and a microphone MIC or another kind of voice input, such as a connector for a microphone. The transmitter TX, receiver RX, memory MEM, and microphone MIC are connected to the processing unit CPU through one or more connection buses BUS.

The terminal 31 is adapted to send data packets 13, preferably in a series of data packets, to a network 100 for being forwarded to a destination terminal 32. For transmitting the data packet, the terminal 31 may be adapted to use an unresponsive transmission protocol, such as UDP, and the interface between the terminal 31 and the network 100 may carried over a wireless link, such as a radio link, or over a cable link, such an electrical or optical cable.

The data packets 13 are preferably forwarded by at least one network unit 101, such as a router, to the destination terminal 32.

The network 100 or the destination terminal 32 may be adapted to send a control message MSG to the terminal 31. If the network 100 is adapted to send the control message MSG, it may be sent by the network unit 101 or by any other network unit in the network 100.

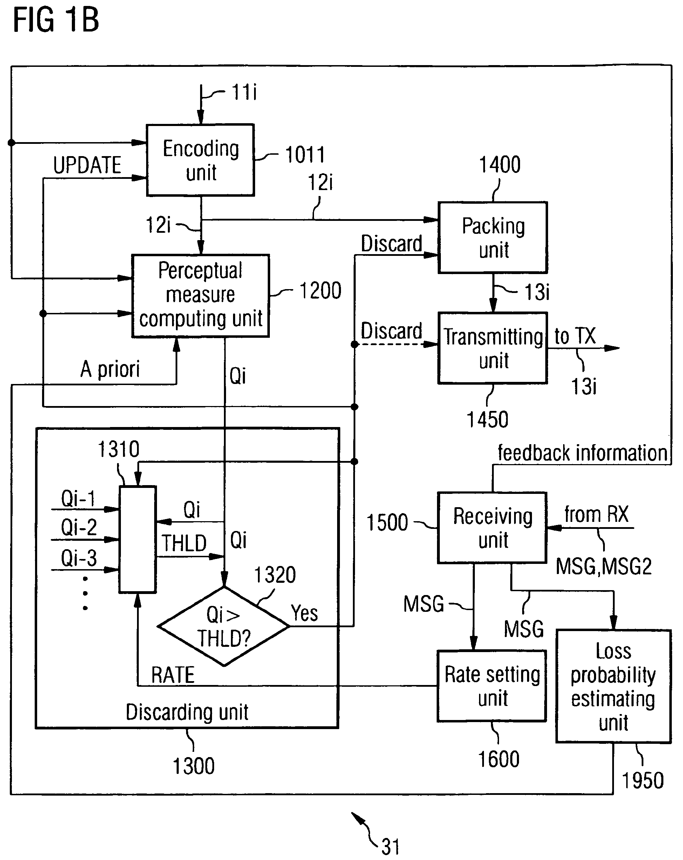

Figure 1B illustrates some functional blocks of a terminal 31 according to one aspect of the invention. The functional blocks may be stored in the memory MEM and executed in the processing unit CPU.

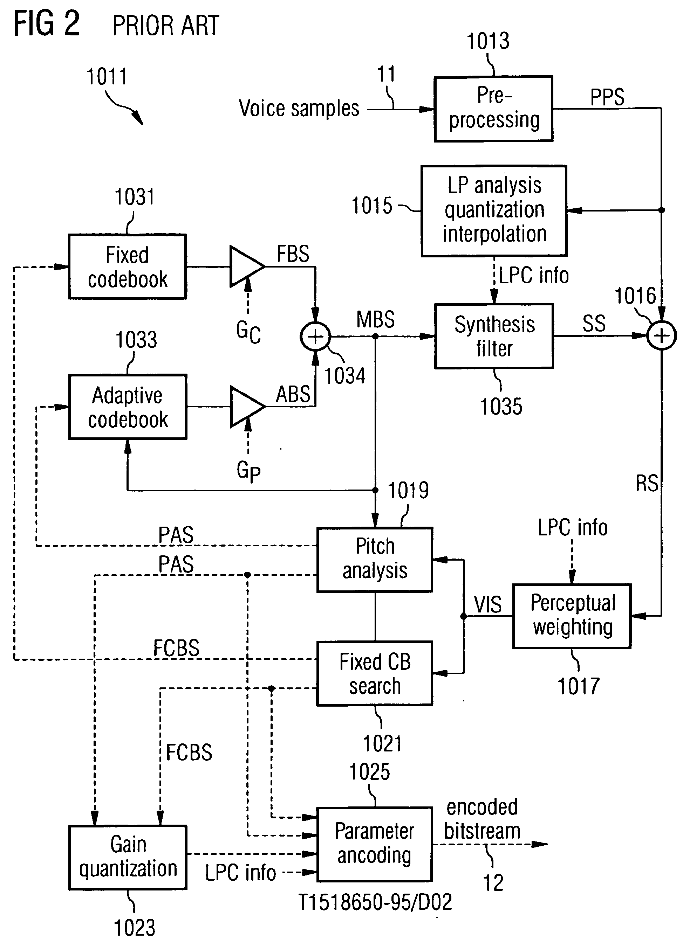

The terminal 31 comprises an encoding unit 1011 adapted to encode a part 11ᵢ of a sampled audio stream to an encoded part 12ᵢ. The sampled audio stream preferably comprises or consists of voice samples that have been received from the microphone MIC or from the voice input and possible sampled after that. The encoding unit 1011 is preferably a state-dependent codec, and below with reference to Figure 2, an embodiment of the invention where the encoding unit 1011 is a CELP encoder is described in more detail. The skilled person appreciates that the invention is limited neither to state-dependent codecs in general nor to CELP encoders in particular, but that any suitable encoder can be used as the encoding unit 1011.

The encoded part 12ᵢ is passed to packing unit 1400 and possibly also to perceptual measure computing unit 1200.

The packing unit 1400 packs the encoded part 12ᵢ into a data packet 13ᵢ that is passed to transmitting unit 1450 that are adapted to pass the data packet 13ᵢ further to the transmitter TX which is adapted to transmit the data packet 13i to the network 100. In the packing unit 1400 and transmitting unit 1450, the encoded part 12ᵢ may be embedded into suitable protocol field or fields, depending on the implementation of the interface between the terminal 31 and the network 100, and on the implementation of the transmission of sampled audio stream between the terminal 31 and the destination terminal 32.

According to a first aspect of the present invention, the terminal 31 comprises discarding unit 1300 adapted to perform the discarding of an encoded part 12ᵢ or of a data packet 13ᵢ comprising an encoded part 12ᵢ responsive to perceptual importance of the encoded part 12ᵢ. The perceptual importance is the impact on quality of the regenerated sampled audio stream at a decoder at the destination terminal 32 as estimated at the terminal 31.

To effect the discarding responsive to perceptual importance, a perceptual measure computing unit 1200 is preferably adapted to compute a perceptual measure Qᵢ from the encoded part 12ᵢ; alternatively or in addition, certain characteristic features of the audio signal associated with the encoded part 12ᵢ may be used. The characteristic feature may comprise a representation of change in energy envelope. The perceptual measure Qᵢ is further passed to the discarding unit 1300 that may comprise a comparison unit 1320 adapted to compare the perceptual measure Qᵢ with a threshold THLD. If the perceptual measure Qᵢ decreases monotonically as a function of perceptual importance and it is above the threshold THLD, the discarding unit 1300 guides the packing unit 1400 or the transmitting unit 1450 to discard the encoded part 12ᵢ or the data packet 13ᵢ carrying the encoded part 12ᵢ. This guiding may be performed by sending a DISCARD message or by changing the state of a common register in the memory MEM or in the processing unit CPU.

The perceptual measure Qᵢ is preferably computed for each encoded part 12ᵢ of the data stream. In this computation, available information about preceding encoded parts 12ᵢ₋₃, 12ᵢ₋₂, 12ᵢ₋₁ and succeeding encoded parts 12ᵢ₊₁, 12ᵢ₊₂, 12ᵢ₊₃ can be used. The decision to discard an encoded part 12ᵢ is fed to the perceptual measure computing unit 1200 as a certain indication of the loss of the encoded part 12ᵢ. A priori loss probability can be estimated, preferably from one or more control messages MSG received by receiving unit 1500 that are preferably passed to a loss probability estimating unit 1950, so that the *a priori* probability P(received) for successful reception of data packet 13ᵢ can be fed to the perceptual measure computing unit 1200 and thereby also used when computing the perceptual measure Qᵢ.

These probabilities may change as a response to feedback information received either in a control message MSG, preferably received from the destination terminal 32, or in a feedback message MSG2 received either from the network 100 or from the destination terminal 32. The feedback information is fed to the perceptual measure computing unit 1200. In addition, they may change in response to discarding of a packet 13ᵢ as preferably communicated by the UPDATE message. In short, the perceptual measure computing unit 1200 may use the *a posteriori* probabilities P(received|feedback or DISCARD), P(lost|feedback or DISCARD).

If there is a feedback information or if a packet 13ᵢ is discarded (UPDATE message), the encoding unit 1011 is preferably adapted to update the state register SRE if the encoding unit 1011 is a state-dependent encoder.

The terminal 31 may receive a control message MSG from the network 100 or from the destination terminal 32. At the terminal 31, the receiving unit 1500 receive the control message MSG from the receiver RX and pass it to rate setting unit 1600.

The rate setting unit 1600 converts the control message MSG to rate limit RATE, such as in order to enable the network 100 to limit the bit rate or frame rate that may be transmitted from the terminal 31 to the network 100. The rate setting unit 1600 passes the rate limit RATE to a threshold computing unit 1310.

The threshold computing unit 1310 is preferably adapted to give a threshold THLD that is responsive on the rate limit RATE. In this sense, the terminal 31 is adapted to set the threshold THLD responsive to the control message MSG.

Instead of the rate limit RATE or in addition to it, the threshold computing unit 1310 may be further adapted to give the threshold THLD that is responsive to perceptual measure, such as Qᵢ₋₃, Qᵢ₋₂, or Qᵢ₋₁ computed for at least one encoded part 12ᵢ₋₃, 12ᵢ₋₂, or 12ᵢ₋₁, that precedes the encoded part 12ᵢ or to a perceptual measure, such as Qᵢ₊₁, Qᵢ₊₂, or Qᵢ₊₃ computed for at least one encoded part 12ᵢ₊₁, 12ᵢ₊₂, or 12ᵢ₊₃ that succeeds the encoded part 12ᵢ. Any of these earlier or later computed perceptual measures can be used alone or in combination to obtain the threshold THLD, also as a function, especially as a sliding average.

The threshold may be adjusted responsive to history of which packets were discarded. This history can be made available to the threshold computing unit 1310 by feeding decisions as DISCARD messages on discarding back to the threshold computing unit 1310.

This can be used for reducing the resulting quality drop at the decoder at the destination terminal 32, since the terminal 31 may use information on perceptual measure Qᵢ₋₃, Qᵢ₋₂, Qᵢ₋₁ that were computed for preceding encoded parts 12ᵢ₋₃, 12ᵢ₋₂, 12ᵢ₋₁, respectively. Furthermore, this can be used for utilizing the latency caused by the packing unit 1400 and the transmitting unit 1450 since information on perceptual measure Qᵢ₊₁, Qᵢ₊₂, or Qᵢ₊₃ computed for at least one encoded part 12ᵢ₊₁, 12ᵢ₊₂, or 12ᵢ₊₃ succeeding the encoded part 12ᵢ can be used to minimize distortion in the decoder at the destination terminal 32.

In short, the improvement may result from the fact that instead of discarding the encoded part 12ᵢ at the terminal 31, another encoded part such as 12ᵢ₋₃, 12ᵢ₋₂, 12ᵢ₋₁, 12ᵢ₊₁, 12ᵢ₊₂, or 12ᵢ₊₃ may be discarded, preferably within the allowed rate fixed by the rate limit RATE, if this would yield a lower distortion i.e. a higher quality at the decoder at the destination terminal 32.

Figure 2 shows some steps performed by an encoding unit 1011 which in this case is a Conjugate Structure - Algebraic-Code-Excited-Linear Prediction (CS-ACELP) encoder [2]. The CS-ACELP encoder is a special case of a state-dependent encoder, but similar principles may be applied to other Code-Excited-Linear Prediction CELP encoders, and to other state-dependent encoders in general.

In the subset of embodiments of the present invention that comprise a code-excited linear predictive encoder, the data stream is pre-processed to a pre-processed signal PPS in preprocessing unit 1013, and the pre-processed signal PPS is used for Linear Prediction LP analysis, quantization and interpolation in the LP analysis, quantization and interpolation unit 1015, from which LPC info comprising Linear Prediction Coding coefficients is passed to synthesis filter unit 1035 and to perceptual weighting unit 1017.

The output of the synthesis filter, zero input response ZR, is summed with the pre-processed signal PPS in the summing device 1016, and the synthesized residual signal RS is fed to perceptual weighting unit 1017 for perceptual weighting which generates target signal X from the synthesized residual signal RS and the LPC info.

The target signal X is fed to pitch analysis unit 1019 for pitch analysis and to fixed codebook search unit 1021 for fixed codebook search.

The output of the pitch analysis unit 1019, pitch analysis delay PAD, is fed to the adaptive codebook unit 1033. The adaptive codebook unit 1033 gives a signal which after amplifying with a gain decided by gain quantization unit 1023 provides an adaptive codebook excitation signal ACES. The pitch analysis unit 1019 output, pitch analysis parameters PAP, is fed to gain quantization unit 1023 which provides a quantized adaptive codebook gain Gp for parameter encoding unit 1025 and the generation of adaptive codebook excitation signal ACES. The pitch analysis unit 1019 output, (filtered) adaptive codebook contribution ACC is fed to the fixed codebook search unit 1021.

The fixed codebook search unit 1021 output, fixed codebook search parameters FCSP is fed to the fixed codebook unit 1031. The fixed codebook unit 1031 gives a signal, which after amplifying with a gain Gc decided by gain quantization unit 1023 provides a fixed codebook excitation signal FCES. The fixed codebook search unit 1021 output, fixed codebook gain FCG is fed to gain quantization unit 1023 which provides a quantized fixed codebook gain Gc for parameter encoding unit 1025 and for the generation of fixed codebook excitation signal FCES.

The fixed codebook excitation signal FCES and adaptive codebook excitation signal ACES are mixed in the mixing device 1034 which thereby forms the mixed excitation signal MES used to update adaptive codebook unit 1033, pitch analysis unit 1019, and synthesis filter unit 1035.

The parameter encoding unit 1025 encodes pitch analysis delay PAD, LPC info, both gains Gp and Gc, and fixed codebook search parameters FCSP to an encoded bit stream.

The state register SRE of an CS-ACELP encoder comprises LP analysis, quantization and interpolation unit 1015, perceptual weighting unit 1017, gain quantization unit 1023, adaptive codebook unit 1033, and synthesis filter unit 1035.

According to this aspect of the invention, not being limited to a CS-ACELP or CELP encoder but applicable for any state-dependent encoder, especially for any state-dependent speech encoder, so that when the encoding unit 1011 is responsive to state of a state register SRE, the terminal 31 is preferably adapted, whenever an encoded part 12ᵢ or a data packet 13ᵢ comprising an encoded part 12ᵢ is discarded by the discarding unit 1300, i) to return the state register SRE to a state preceding the encoding of the part 11ᵢ to the encoded part 12ᵢ, ii) not to update the state register SRE after encoding the part 11ᵢ to the encoded part 12ᵢ, or iii) to return the state register to an estimated state of a state register SRE in a decoder of the destination terminal 32. This can be effected by adapting the encoding unit 1011 to receive an UPDATE message from the discarding menas 1300, or so that the encoding unit 1011 are adapted to read a common register in the memory MEM or in the processing unit CPU that the discarding unit 1300 are adapted to update.

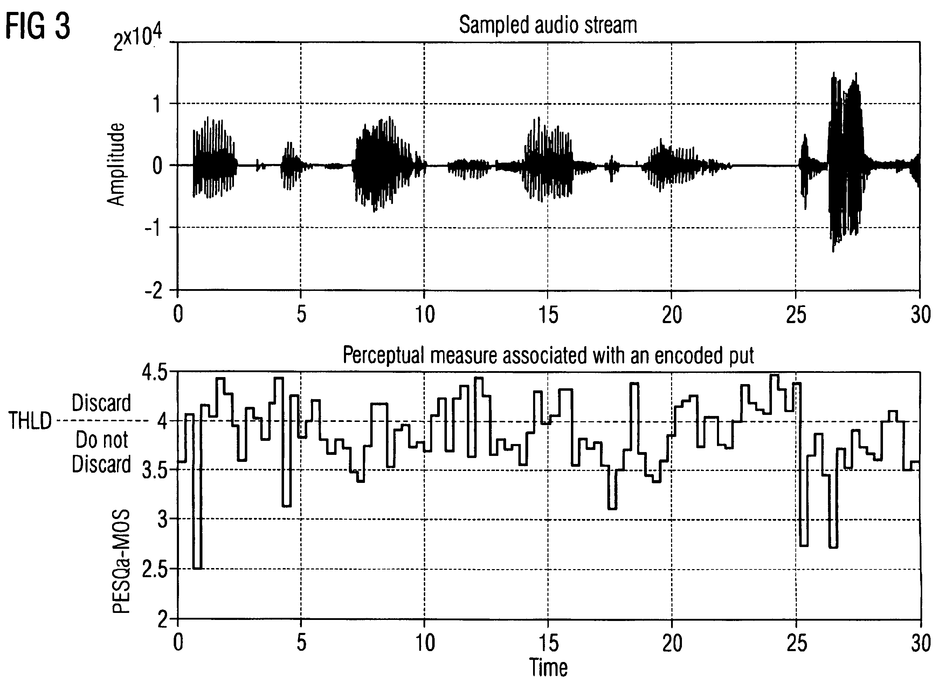

Figure 3 illustrates discarding of encoded parts 12 of a sampled audio stream (shown in top) responsive to their perceptual measure Q (shown in bottom). The terminal 31 is preferably adapted to set the threshold value THLD responsive to the control message MSG. In the example of Figure 3, adjusted Percept Evaluation of Speech Quality - Mean Opinion Score PESQa-MOS [3] and [4] can be used but in principle any other method suitable for estimating perceptual importance for audio stream, especially speech, can be used. Signal-to-Noise Ratio SNR, Log Spectral Distortion LSD, Measuring Normalizing Blocks MNB, and Perceptual Speech Quality Measure PSQM are examples of measures that can be used instead of or in addition to PESQa-MOS as methods to obtain an estimate for the perceptual importance, i.e. the perceptual importance measure Qᵢ.

A system comprising at least one terminal 31, a network 100, and a network unit 101 or a destination terminal 32 is preferably adapted, upon detecting network congestion or loss of packets, to transmit a control message MSG to at least one terminal 31.

The control message MSG is preferably adapted to increase discarding of encoded frames 12 or data packets 13 upon increasing network congestion, or to decrease the discarding of encoded frames 12 or data packets 13 upon decreasing network congestion.

Even though the invention has been disclosed by way of examples, it is clear that the invention is not limited to the examples but the scope of the patent claims should be interpreted with the appended patent claims and the description. Especially, the terminal 31 and the network 100 may be adapted to communicate with each other using the Internet Protocol, and/or using any cellular radio communication protocol.

### References cited:

[1] S. Floyd, E. Kohler, draft-ietf-dccp-tfrc-voip-01,txt; TCP Friendly Rate Control (TFRC) for voice: VoIP variant and Faster Restart, 2005
[2] Defined in ITU-T G.729 specification "Coding of Speech at 8 kbit/s using CS-ACELP", 1996
[3] Defined in "Voice over IP - Encoder Based Differentiated Packet Handling by Objective Perceptual Speech Quality Measure", Master Thesis of S. Praestholm and S.S. Jensen, Aalborg University, Aalborg, Denmark, 2004
[4] Specification ITU-T P.862 "Perceptual Evaluation of Speech Quality (PESQ)", ITU, 2001

## Claims

1. A terminal (31) comprising:
- an encoding means (1011) adapted to encode parts (11) of a sampled audio stream to encoded parts (12);
- means (1400, 1450) adapted to transmit encoded parts (12) to a network (100) in data packets (13) for being transmitted to a destination terminal (32); and
- a discarding means (1300) adapted, responsively to receiving a control message (MSG) from the network (100) or from the destination terminal (33), to start discarding encoded parts (12) or data packets (13); **characterized in that:**
the discarding means (1300) is adapted to perform the discarding of an encoded part (12ᵢ) or
of a data packet (13ᵢ) comprising an encoded part (12ᵢ) responsive to perceptual importance of the encoded part (12ᵢ).

2. A terminal (31) according to claim 1, **wherein:** the terminal (31) comprises a unit (1200) adapted to compute a perceptual measure (Qᵢ) for an encoded part (12ᵢ), the perceptual measure (Qᵢ) preferably reflecting the perceptual importance of the encoded part (12ᵢ), and where the discarding means (1300) is adapted to discard the encoded part (12ᵢ) or a data packet (13ᵢ) comprising the encoded part (12ᵢ) if the perceptual measure (Qᵢ; PESQa-MOS) fails a comparison with a threshold value (THLD).

3. A terminal (31) according to claim 2, **wherein:** the terminal (31) is adapted to set the threshold value (THLD) responsive to the control message (MSG).

4. A terminal (31) according to claim 2 or 3, **wherein:** the terminal (31) is adapted to set the threshold value (THLD) responsive to perceptual measure (Qᵢ₋₃; Qᵢ₋₂; Qᵢ₋₁; Qᵢ₊₁; Qᵢ₊₂; Qᵢ₊₃) computed for at least one encoded part (12ᵢ₋₃; 12ᵢ₋₂; 12ᵢ₋₁; 12ᵢ₊₁; 12ᵢ₊₂; 12ᵢ₊₃) preceding or succeeding the encoded part (12ᵢ).

5. A terminal (31) according to claim 2, 3, or 4, **wherein:**
the terminal (31) is adapted to set the threshold value (THLD) responsive to at least one previously taken decision on whether an encoded part (12ᵢ₋₁, 12ᵢ₋₂, 12ᵢ₋₃, ... ) or a packet (13ᵢ₋₁, 13ᵢ₋₂, 13ᵢ₋₃, ...) is discarded or not.

6. A terminal (31) according to any one of the preceding claims, **wherein:** the encoding means (1011) is responsive to state of a state register and is adapted, whenever an encoded part (12ᵢ) or a data packet (13ᵢ) comprising an encoded part (12ᵢ) is discarded by the discarding means (1300), i) to return the state register to a state preceding the encoding of the part (11ᵢ) to the encoded part (12ᵢ), ii) not to update the state register after encoding the part (11ᵢ) to the encoded part (12ᵢ), or iii) to return the state register to an estimated state of a state register in a decoder of the destination terminal (32).

7. A terminal (31) according to any one of the preceding claims, **wherein:** the terminal (31) is adapted to compute the perceptual measure responsive to at least one previously taken decision on whether an encoded part (12ᵢ₋₁, 12ᵢ₋₂, 12ᵢ₋₃, ...) or a packet (13ᵢ₋₁, 13ᵢ₋₂, 13ᵢ₋₃, ...) is discarded or not.

8. A terminal (31) according to any one of the preceding claims, **wherein:** the terminal (31) is adapted to compute the perceptual measure (Qᵢ) responsive to the delivery status of at least one preceding or succeeding encoded part (12ᵢ₋ⱼ or 12ᵢ₊ⱼ; j=1, 2, 3, ...) weighted using weights ((Pᵢ₋ⱼ (lost),Pᵢ₋ⱼ (received), or Pᵢ₊ⱼ (lost),Pᵢ₊ⱼ (received)) generated responsive to control messages (MSG).

9. A terminal (31) according to claim 8, **wherein:** the terminal (31) is adapted to adjust the weights ((Pᵢ₋ⱼ(lost), Pᵢ₋ⱼ (received)) upon receiving feedback ((Pᵢ₋ⱼ(lost|feedback), (Pᵢ₋ⱼ(received|feedback)) from the network (100) communicating the status of a data packet (13ᵢ₋ⱼ) comprising the encoded part (12ᵢ₋ⱼ) for at least part of the end-to-end connection.

10. A system comprising:
- at least one terminal (31) according to any one of claims 1 to 9;
- a network (100); and
- a network unit (101) or a destination terminal (32) adapted, upon detecting network congestion or loss of packets, to transmit a control message (MSG) to at least one terminal (31) or to communicate the information as part of an ongoing flow of control messages (MSG).

11. A system according to claim 10, **wherein:** the terminal (31) is adapted to increase or decrease discarding of encoded frames (12) or data packets (13) responsive to a change in the control message (MSG) or to a change in the rate of control messages (MSG).

12. A method for discarding encoded parts (12) of a sampled audio stream at a terminal (31), comprising the steps of:
- encoding parts (11) of a sampled audio stream to encoded parts (12);
- transmitting encoded parts (12) to a network (100) in data packets (13) for being transmitted to a destination terminal (32); and
- in response to receiving a control message (MSG) from the network (100), starting to discard encoded parts (12) prior to packing into a data packet or data packets (13) comprising an encoded part (12) responsive to perceptual importance of the encoded parts (12).

13. A method according to claim 12, **wherein:** the method further comprises a step of computing a perceptual measure (Qᵢ) for an encoded part (12ᵢ), and wherein the step of discarding an encoded part (12ᵢ) or a data packet (13ᵢ) comprising the encoded part (12ᵢ) is performed if the perceptual measure (Qᵢ) is above a threshold value (THLD) for a perceptual measure monotonically decreasing as a function of perceptual importance, conversely below a threshold for a monotonically increasing relationship between the perceptual measure (Qᵢ; PESQa-MOS) and perceptual importance.

14. A method according to claim 13, **wherein:** the threshold value (THLD) is set responsive to the control message (MSG).

15. A method according to claim 14, **wherein:** the threshold value (THLD) is set responsive to perceptual measure (Qᵢ₋₃; Qᵢ₋₂; Qᵢ₋₁; Qᵢ₊₁; Qᵢ₊₂; Qᵢ₊₃) computed for at least one encoded part (12ᵢ₋₃; 12ᵢ₋₂; 12ᵢ₋₁; 12ᵢ₊₁; 12ᵢ₊₂; 12ᵢ₊₃) preceding or succeeding the encoded part (12ᵢ)

## Patentansprüche

1. Endgerät (31), das Folgendes umfasst:
- ein Encodiermittel (1011), das zum Encodieren von Teilen (11) eines abgetasteten Audiostroms in encodierte Teile (12) ausgelegt ist;
- Mittel (1400, 1450), die zum Senden von encodierten Teilen (12) zu einem Netzwerk (100) in Datenpaketen (13) zum Senden zu einem Zielendgerät (32) ausgelegt sind; und
- ein Verwerfmittel (1300), so ausgelegt, dass es als Reaktion auf den Empfang einer Steuernachricht (MSG) von dem Netzwerk (100) oder von dem Zielendgerät (33) mit dem Verwerfen von encodierten Teilen (12) oder Datenpaketen (13) beginnt, **dadurch gekennzeichnet, dass**:
das Verwerfmittel (1300) zum Verwerfen eines encodierten Teils (12ᵢ), oder
eines Datenpakets (13ᵢ), das einen encodierten Teil (12ᵢ) umfasst, als Reaktion auf Wahrnehmungsbedeutung des encodierten Teils (12ᵢ) ausgelegt ist.

2. Endgerät (31) nach Anspruch 1, wobei: das Endgerät (31) eine Einheit (1200) umfasst, ausgelegt zum Berechnen eines Wahrnehmungsmaßes (Qᵢ) für einen encodierten Teil (12ⱼ), wobei das Wahrnehmungsmaß (Qᵢ) vorzugsweise die Wahrnehmungsbedeutung des encodierten Teils (12ᵢ) reflektiert und wobei das Verwerfmittel (1300) zum Verwerfen des encodierten Teils (12,) oder eines den encodierten Teil (12ᵢ) umfassenden Datenpakets (13ᵢ) ausgelegt ist, wenn das Wahrnehmungsmaß (Qᵢ; PESQa-MOS) einen Vergleich mit einem Schwellenwert (THLD) erfolglos absolviert.

3. Endgerät (31) nach Anspruch 2, wobei: das Endgerät (31) zum Setzen des Schwellenwertes (THLD) als Reaktion auf die Steuernachricht (MSG) ausgelegt ist.

4. Endgerät (31) nach Anspruch 2 oder 3, wobei: das Endgerät (31) zum Setzen des Schwellenwertes (THLD) als Reaktion auf das Wahrnehmungsmaß (Qᵢ₋₃; Qᵢ₋₂; Qᵢ₋₁; Qᵢ₊₁; Qᵢ₊₂; Qᵢ₊₃) ausgelegt ist, das für wenigstens einen encodierten Teil (12ᵢ₋₃; 12ᵢ₋₂; 12ᵢ₋₁; 12ᵢ₊₁; 12ᵢ₊₂; 12ᵢ₊₃) berechnet wird, der dem encodierten Teil (12ᵢ) vorangeht oder folgt.

5. Endgerät (31) nach Anspruch 2, 3 oder 4, wobei: das Endgerät (31) zum Setzen des Schwellenwertes (THLD) als Reaktion auf wenigstens eine zuvor gefällte Entscheidung darüber ausgelegt ist, ob ein encodierter Teil (12ᵢ₋₁, 12ᵢ₋₂, 12ᵢ₋₃, ...) oder ein Paket (13ᵢ₋₁, 13ᵢ₋₂, 13ᵢ₋₃, ...) verworfen wird oder nicht.

6. Endgerät (31) nach einem der vorherigen Ansprüche, wobei: das Encodiermittel (1011) auf den Zustand eines Zustandsregisters anspricht und so ausgelegt ist, dass es, wann immer ein encodierter Teil (12ᵢ) oder ein einen encodierten Teil (12ᵢ) umfassendes Datenpaket (13ᵢ) von dem Verwerfmittel (1300) verworfen wird, i) das Zustandsregister in einen Zustand vor dem Encodieren des Teils (11ᵢ) zu dem encodierten Teil (12ᵢ) zurückführt, ii) das Zustandsregister nach dem Encodieren des Teils (11ᵢ) in den encodierten Teil (12ᵢ) nicht aktualisiert, oder iii) das Zustandsregister in einen geschätzten Zustand eines Zustandsregisters in einem Decoder des Zielendgeräts (32) zurückführt.

7. Endgerät (31) nach einem der vorherigen Ansprüche, wobei: das Endgerät (31) zum Berechnen des Wahrnehmungsmaßes als Reaktion auf wenigstens eine zuvor gefällte Entscheidung darüber ausgelegt ist, ob ein encodierter Teil (12ᵢ₋₁, 12ᵢ₋₂, 12ᵢ₋₃, ...) oder ein Paket (13ᵢ₋₁, 13ᵢ₋₂, 13ᵢ₋₃, ...) verworfen wird oder nicht.

8. Endgerät (31) nach einem der vorherigen Ansprüche, wobei: das Endgerät (31) zum Berechnen des Wahrnehmungsmaßes (Qᵢ) als Reaktion auf den Lieferstatus von wenigstens einem vorhergehenden oder folgenden encodierten Teil (12ᵢ₋ⱼ oder 12ᵢ₊ⱼ; j=1, 2, 3, ...) ausgelegt ist, gewichtet mit Gewichtungen ((Pᵢ₋ⱼ(verloren), Pᵢ₋ⱼ(empfangen), oder Pᵢ₊ⱼ(verloren), Pᵢ₊ⱼ(empfangen)), erzeugt als Reaktion auf Steuernachrichten (MSG).

9. Endgerät (31) nach Anspruch 8, wobei: das Endgerät (31) zum Justieren der Gewichtungen ((Pᵢ₋ⱼ(verloren), Pᵢ₋ⱼ(empfangen)) nach dem Empfang von Feedback ((Pᵢ₋ⱼ(verloren|Feedback), (Pᵢ₋ⱼ(empfangen Feedback)) von dem Netzwerk (100) ausgelegt ist, das den Status eines den encodierten Teil (12ᵢ₋ⱼ) umfassenden Datenpakets (13ᵢ₋ⱼ) für wenigstens einen Teil der End-zu-End-Verbindung übermittelt.

10. System, das Folgendes umfasst:
- wenigstens ein Endgerät (31) nach einem der Ansprüche 1 bis 9;
- ein Netzwerk (100); und
- eine Netzwerkeinheit (101) oder ein Zielendgerät (32), so ausgelegt, dass sie/es nach dem Erkennen von Netzwerküberlastung oder Paketverlust eine Steuernachricht (MSG) zu wenigstens einem Endgerät (31) sendet oder die Informationen als Teil eines laufenden Stroms von Steuernachrichten (MSG) übermittelt.

11. System nach Anspruch 10, wobei: das Endgerät (31) zum Erhöhen oder Verringern des Verwerfens von encodierten Frames (12) oder Datenpaketen (13) als Reaktion auf eine Änderung der Steuernachricht (MSG) oder eine Änderung der Rate von Steuernachrichten (MSG) ausgelegt ist.

12. Verfahren zum Verwerfen von encodierten Teilen (12) eines abgetasteten Audiostroms an einem Endgerät (31), das die folgenden Schritte beinhaltet:
- Encodieren von Teilen (11) eines abgetasteten Audiostroms in encodierte Teile (12);
- Senden von encodierten Teilen (12) zu einem Netzwerk (100) in Datenpaketen (13) zum Senden zu einem Zielendgerät (32); und
- Starten, als Reaktion auf den Empfang einer Steuernachricht (MSG) von dem Netzwerk (100), des Verwerfens von encodierten Teilen (12) vor dem Verpacken in ein Datenpaket oder in Datenpakete (13), das/die einen codierten Teil (12) umfasst/-en, als Reaktion auf Wahrnehmungsbedeutung der encodierten Teile (12).

13. Verfahren nach Anspruch 12, wobei: das Verfahren ferner einen Schritt des Berechnens eines Wahrnehmungsmaßes (Qᵢ) für einen encodierten Teil (12ᵢ) beinhaltet und wobei der Schritt des Verwerfens eines encodierten Teils (12ᵢ) oder eines den encodierten Teil (12ᵢ) umfassenden Datenpakets (13ᵢ) durchgeführt wird, wenn das Wahrnehmungsmaß (Qᵢ) über einem Schwellenwert (THLD) für ein in Abhängigkeit von der Wahrnehmungsbedeutung monoton abnehmendes Wahrnehmungsmaß, umgekehrt unterhalb eines Schwellenwertes für eine monoton zunehmende Beziehung zwischen dem Wahrnehmungsmaß (Q*ᵢ*; PESQa-MOS) und der Wahrnehmungsbedeutung liegt.

14. Verfahren nach Anspruch 13, wobei: der Schwellenwert (THLD) als Reaktion auf die Steuernachricht (MSG) gesetzt wird.

15. Verfahren nach Anspruch 14, wobei: der Schwellenwert (THLD) als Reaktion auf das Wahrnehmungsmaß (Qᵢ₋₃; Qᵢ₋₂; Qᵢ₋₁; Qᵢ₊₁; Qᵢ₊₂; Qᵢ₊₃) gesetzt wird, das für wenigstens einen encodierten Teil (12ᵢ₋₃; 12ᵢ₋₂; 12ᵢ₋₁; 12ᵢ₊₁; 12ᵢ₊₂; 12ᵢ₊₃) berechnet wird, der dem encodierten Teil (12ᵢ) vorangeht oder folgt.

## Revendications

1. Un terminal (31) comprenant :
- un moyen de codage (1011 ) adapté de façon à coder des parties (11) d'un flux audio échantillonné en parties codées (12);
- un moyen (1400, 1450) adapté de façon à transmettre des parties codées (12) à un réseau (100) dans des paquets de données (13) destinés à être transmis à un terminal de destination (32); et
- un moyen de rejet (1300) adapté, en réponse à la réception d'un message de commande (MSG) à partir du réseau (100) ou du terminal de destination (33), de façon à démarrer le rejet de parties codées (12) ou de paquets de données (13), **caractérisé en ce que** : le moyen de rejet (1300) est adapté de façon à exécuter le rejet d'une partie codée (12ᵢ) ou
d'un paquet de données (13ᵢ) contenant une partie codée (12,) en réponse à une importance perceptuelle de la partie codée (12ᵢ).

2. Un terminal (31) selon la Revendication 1, où : le terminal (31) comprend une unité (1200) adaptée de façon à calculer une mesure perceptuelle (Qᵢ) pour une partie codée (12ᵢ), la mesure perceptuelle (Qᵢ) reflétant de préférence l'importance perceptuelle de la partie codée (12ᵢ), et où le moyen de rejet (1300) est adapté de façon à rejeter la partie codée (12ᵢ) ou un paquet de données (13ᵢ) contenant la partie codée (12ᵢ) si la mesure perceptuelle (Qᵢ; PESQa-MOS) échoue à une comparaison à une valeur seuil (THLD).

3. Un terminal (31) selon la Revendication 2, où : le terminal (31) est adapté de façon à définir la valeur seuil (THLD) en réponse au message de commande (MSG).

4. Un terminal (31) selon la Revendication 2 ou 3, où : le terminal (31) est adapté de façon à définir la valeur seuil (THLD) en réponse à une mesure perceptuelle (Qᵢ₋₃; Qᵢ₋₂; Qᵢ₋₁; Qᵢ₊₁; Qᵢ₊₂; Qᵢ₊₃) calculée pour au moins une partie codée (12ᵢ₋₃; 12ᵢ₋₂; 12ᵢ₋₁; 12ᵢ₊₁; 12ᵢ₊₂; 12ᵢ₊₃) qui précède ou qui suit la partie codée (12ᵢ).

5. Un terminal (31) selon la Revendication 2, 3, ou 4, où : le terminal (31) est adapté de façon à définir la valeur seuil (THLD) en réponse à au moins une décision prise antérieurement selon qu'une partie codée (12ᵢ₋₁, 12ᵢ₋₂, 12ᵢ₋₃, ... ) ou un paquet (13ᵢ₋₁, 13ᵢ₋₂, 13ᵢ₋₃,...) est rejetée ou non.

6. Un terminal (31) selon l'une quelconque des Revendications précédentes, où :
le moyen de codage (1011) est réactif à un état d'un registre d'états et est adapté,
chaque fois qu'une partie codée (12ᵢ) ou un paquet de données (13ᵢ) contenant une partie codée (12ᵢ) est rejeté par le moyen de rejet (1300), i) de façon à ramener le registre d'états vers un état qui précède le codage de la partie (11ᵢ) vers la partie codée (12ᵢ), ii) de façon à ne pas actualiser le registre d'états après le codage de la partie (11ᵢ) vers la partie codée (12ᵢ), ou iii) de façon à ramener le registre d'états vers un état estimé d'un registre d'états dans un décodeur du terminal de destination (32).

7. Un terminal (31) selon l'une quelconque des Revendications précédentes, où :
le terminal (31) est adapté de façon à calculer la mesure perceptuelle en réponse à au moins une décision prise antérieurement selon qu'une partie codée (12ᵢ₋₁, 12ᵢ₋₂, 12ᵢ₋₃, ... ) ou un paquet (13ᵢ₋₁, 13ᵢ₋₂, 13ᵢ₋₃, ... ) est rejeté ou non.

8. Un terminal (31) selon l'une quelconque des Revendications précédentes, où :
le terminal (31) est adapté de façon à calculer la mesure perceptuelle (Qᵢ) en réponse au statut de remise d'au moins une partie codée précédente ou suivante (12ᵢ₋ⱼ ou 12ᵢ₊ⱼ; j=1, 2, 3, ...) pondérée au moyen de poids ((Pᵢ₋ⱼ(perdu), Pᵢ₋ⱼ(reçu), ou Pᵢ₊ⱼ(perdu), Pᵢ₊ⱼ (reçu)) générés en réponse à des messages de commande (MSG).

9. Un terminal (31) selon la Revendication 8, où : le terminal (31) est adapté de façon à ajuster les poids ((Pᵢ₋ⱼ(perdu), Pᵢ₋ⱼ(reçu))lors de la réception d'une rétroaction ((Pᵢ₋ⱼ(perdu|rétroaction), (Pᵢ₋ⱼ(reçu|rétroaction))à partir du réseau (100) communiquant le statut d'un paquet de données (13ᵢ₋ⱼ) contenant la partie codée (12ᵢ₋ⱼ) pour au moins une partie de la connexion de bout en bout.

10. Un système comprenant :
- au moins un terminal (31) selon l'une quelconque des Revendications 1 à 9;
- un réseau (100); et
- une unité de réseau (101) ou un terminal de destination (32) adapté, en cas de détection d'une congestion de réseau ou d'une perte de paquets, de façon à transmettre un message de commande (MSG) à au moins un terminal (31) ou à communiquer les informations en tant que partie d'un flux continu de messages de commande (MSG).

11. Un système selon la Revendication 10, où : le terminal (31) est adapté de façon à augmenter ou diminuer le rejet de trames codées (12) ou de paquets de données (13) en réponse à une modification dans le message de commande (MSG) ou à une modification dans le débit de messages de commande (MSG).

12. Un procédé de rejet de parties codées (12) d'un flux audio échantillonné au niveau d'un terminal (31) comprenant les étapes suivantes :
- le codage de parties (11) d'un flux audio échantillonné en parties codées (12);
- la transmission de parties codées (12) à un réseau (100) dans des paquets de données (13) destinés à être transmis à un terminal de destination (32); et
- en réponse à la réception d'un message de commande (MSG) à partir du réseau (100), le démarrage du rejet de parties codées (12) avant le conditionnement dans un paquet de données ou des paquets de données (13) contenant une partie codée (12) en réponse à une importance perceptuelle des parties codées (12).

13. Un procédé selon la Revendication 12, où : le procédé comprend en outre une étape de calcul d'une mesure perceptuelle (Qᵢ) pour une partie codée (12ᵢ), et où l'opération de rejet d'une partie codée (12ᵢ) ou d'un paquet de données (13ᵢ) contenant la partie codée (12ᵢ) est exécutée si la mesure perceptuelle (Qᵢ) se situe au-dessus d'une valeur seuil (THLD) pour une mesure perceptuelle diminuant de manière monotone sous la forme d'une fonction d'importance perceptuelle, réciproquement sous un seuil pour une relation augmentant de manière monotone entre la mesure perceptuelle (Q*ᵢ*, PESQa-MOS) et une importance perceptuelle.

14. Un procédé selon la Revendication 13, où : la valeur seuil (THLD) est définie en réponse au message de commande (MSG).

15. Un procédé selon la Revendication 14, où : la valeur seuil (THLD) est définie en réponse à une mesure perceptuelle (Qᵢ₋₃; Qᵢ₋₂; Qᵢ₋₁; Qᵢ₊₁; Qᵢ₊₂; Qᵢ₊₃) calculée pour au moins une partie codée (12ᵢ₋₃; 12ᵢ₋₂; 12ᵢ₋₁; 12ᵢ₊₁; 12ᵢ₊₂; 12ᵢ₊₃) qui précède ou qui suit la partie codée (12ᵢ).
